# EUROPEAN PATENT SPECIFICATION

(11) **EP 1 973 078 B1**
(45) Date of publication and mention of the grant of the patent: **18.05.2011**
(21) Application number: 07104777.3
(22) Date of filing: 23.03.2007
(51) Int. Cl.: G07C 5/08

(54) **System and method improving the driving efficiency**
System und Verfahren zur Verbesserung der Fahreffizienz
Système et procédé d'amélioration de l'efficacité de la conduite

(43) Date of publication of application: 24.09.2008
(73) Proprietor: Heusch, Christian, 8800 Thalwil (CH)
(72) Inventor: Heusch, Christian, 8800 Thalwil (CH)
(74) Representative: OK pat AG

(56) References cited:
- EP-A- 1 679 673
- EP-A1- 1 059 508
- EP-A1- 1 302 356
- WO-A-00/07150
- GB-A- 2 432 437
- US-A1- 2002 165 694
- US-A1- 2007 001 831
- US-A1- 2007 027 593
- US-B2- 6 580 973

## Description

### Field of the invention

The present invention concerns problems related to the driving efficiency of a vehicle.

### Background of the invention

As pollution, the number of accidents and congestion of road traffic are of more and more concern, a need to improve the driving efficiency is imminent. Several researches show that a great deal of the above-mentioned are caused by inefficient driving. Inefficient driving means in the present context unnecessary acceleration/ breakings, aggressive maneuvers, driving non-optimal routes, etc. These behaviors not only increase fuel consumption, generate more pollution and increase the risk of accidents but also create a discomfort to passengers as well as contribute to a premature wear of several components of these vehicles.

Some amount of these negative aspects could be overcome by a more efficient driving. The problem the present invention aims to solve is that in order to drive more efficiently drivers require more and better organized information than it is currently available. This information includes road and traffic conditions, comparisons between different drives of same route, data reflecting abrupt accelerations/ decelerations and advise regarding a route that is optimal considering multiple factors.

Nowadays most of the cars in production are equipped with a large number of sensors that are able to measure a wide range of parameters of a vehicle. In most cases these sensors are connected to the security system of these vehicles. A good example to the use of the data recorded by these sensors is the deployment of airbags which is done according to a multitude of parameters, such as impact forces, velocity of the vehicle, seatbelt use, direction of the impact, etc.

Also more and more cars are equipped, or may be equipped at a low cost with GPS or similar geographical positioning receivers.

European patent application EP1302356 A1 concerns an improved cruise control system. This system does address the driving efficiency of a car.

The published PCT application WO 00/07150) concerns the driving efficiency. An actual driving style is compared with a normative driving style. This normative driving style is determined based on the actual driving style and based on factors, which are stored in the system.

US patent application US 2007/0027593 also addresses efficiency aspects. D7 employs a central system. Data are sent from a car to the central system. The central system perform an analysis of the data. It is a disadvantage of such a system that is relies on a connection to a central system.

It is an object of the present invention to develop and propose a system that will help the drivers of vehicles to drive their vehicle more economically efficient. In this context the expression "economically efficient" is used in the broadest possible sense, since it does not only cover such aspects as fuel consumption and pollution, but also the wear of tires, the noise level, the comfort of passengers, etc. The system to be developed should be easy to use and the cost of installment should be reasonable.

### SUMMARY OF THE INVENTION

The present invention relates to a method and a corresponding system that enables an improvement in the driving efficiency of a vehicle by providing various indications to the driver of the vehicle reflecting the efficiency of his driving, said indication being based on the comparison of the currently recorded parameters and parameters recorded during previous drives of the same route or with parameters recorded by similar systems of other vehicles.

The system records data from the built-in or add-on sensors of the vehicle and relates these recordings to routes driven, routes determined by the succession of the coordinates received from the GPS or similar geographical positioning receiver.

In one particular embodiment of the invention the system takes in consideration all the data that can be acquired already without the deployment of any new sensors and expensive devices. The respective system in this case is an add-on system that harvests this potential.

In one preferred embodiment, the inventive system provides an inherent motivation in that a comparison is offered with previous drive, test drives, virtual drives or with the results achieved by other driver using the same car or a similar car.

### Brief description of the drawings

For a more complete description of the present invention and for further objects and advantages thereof, reference is made to the following description, taken in conjunction with the accompanying drawings, which show:
- Fig. 1: a schematic structural diagram of a system in accordance with the present invention;
- Fig. 2: a star topology network of a Driving Efficiency Improving System in accordance with the present invention;
- Fig. 3: an ad-hoc network of a Driving Efficiency Improving System in accordance with the present invention;
- Fig. 4: a flowchart of an initiation drive of a route, according to the present invention;
- Fig. 5: a flowchart of consecutive drives of a route, according to the present invention;
- Fig. 6: a diagram of gravitational forces that reflects the accelerations/braking of the vehicle, according to the present invention; and
- Fig. 7: an analysis of a drive and the mapping of to a geographical map, according to the present invention.

### DESCRIPTION OF PREFERRED EMBODIMENTS

The driving efficiency improvement system according to the present invention is a built-in system (also called integrated system) of a vehicle that is installed during manufacturing or it may be designed as an add-on system (also called attached system) that can be installed at any time independently from the manufacturer of the vehicle.

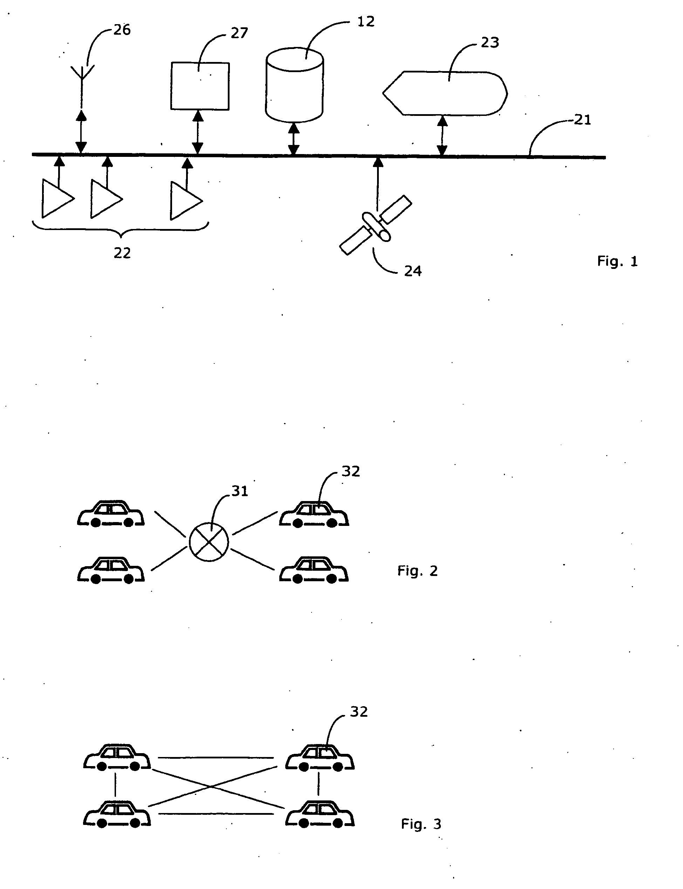

As shown in Fig. 1, in a preferred embodiment the system of the current invention is designed to connect to a communication bus system 21 (CAN bus or similar) of a vehicle, the same bus that all or some of the sensors 22 and vehicle monitoring devices are connected to. In this way the Driving Efficiency Improving System can have access to the data recorded, captured or provided by the existing onboard sensors of the vehicle.

For the sake of simplicity, in the following the word "recorded" as a synonym for the recording, capturing, establishing or delivering of data or parameters by sensors.

A geographical positioning device 24, such as a GPS receiver, is also connected or linked to this bus 21. This positioning device 24 plays a major role when the system maps the parameters with are recorded or provided to exact geographical positions.

All the elements of the Driving Efficiency Improving System have interfaces that enable a communication using the specific bus system (e.g. the bus 21) used in the specific vehicle it is to be deployed in. The system uses its own or a shared computational device 27 (CPU) to make the necessary operations with the data captured. These operations include:
- normalization of the recordings to enable an objective comparison with other recordings;
- averaging of a range of recordings of the same parameter over a time span;
- preparing warning signals and different visual or audible warnings reflecting the comparison of a parameter or parameters of different parameter sets;
- mapping of the recorded set of parameters to a map to relate said set of parameters to a route 71 between two geographical locations; and
- forwarding the recorded set of parameters or some of the recorded parameters to similar systems of other vehicles using some sort of transmitting means like an antenna 26.

The system also includes a display or other means of indicators 23 which can be dedicated or shared with the ones already existing in the vehicle. Beside visual indicators these may also include audible or other means to inform the driver.

The recorded parameters are stored in a suitable storage device 12 which may be of magnetic (hard-drive), optical (CD or DVD), or semiconductor (Memory modules) types. The capacity of said storage device 12 is to be chosen so that an extensive history of recoded parameters can be stored for use in comparisons and in building more substantial analysis of the driving efficiency. A compression scheme can be used.

According to the invention, a non-exhaustive list of said recorded parameters is:
- acceleration/deceleration,
- longitudinal and lateral gravitational forces,
- fuel consumption,
- produced noise levels,
- vehicle speed,
- geographical coordinates,
- rotational speed of the engine of the vehicle,
- quantity of emitted pollutant gases,
- special landmarks,
- special events.
All or some of these parameters are recorded or measured using suitable means, such as sensors or measuring devices for example.

An antenna 26 or other suitable means are used for receiving/transmitting recorded parameters to/from similar compatible systems. By the use of such a layout a network of interconnected Driving Efficiency Improving Systems is constructed where vehicles communicate in order to enable the system to have a realistic view of the driving conditions. The network can have either a star topology network with a central station 31 that acts as a concentrator for all communication as it can be seen in Fig. 2, or it can be an ad-hoc network where all vehicles 32 communicate with each other without a central station, as depicted in Fig. 3.

In a network with a central station 31, as is schematically presented on Fig. 2, an advantage is an increased control of the communication so that the integrity of the messages and the correctness of information contained can be checked. However, such networks are more rigid, and have the major disadvantage that if the central station 31 is not reachable or is not functioning correctly, the entire network is affected.

In an ad-hoc network similar to the one depicted in Fig. 3, the main advantage is flexibility. In such a system vehicles 32 communicate with other vehicles 32 equipped with a similar Driving Efficiency Improving System in order to obtain more information about road conditions and driving efficiency of other vehicles on the same road. Such Driving Efficiency Improving Systems are also capable of passing on the messages received, thus enabling a propagation of messages covering larger areas that might not be coverable directly by the transmitter of the vehicle that initiated the message. The disadvantage of these ad-hoc topologies is that there is no control over the contents of the messages, so each and every receiver has to filter these to avoid false messages to be interpreted. Rules can be employed in the systems to anable the systems to filter out false messages or outdated messages, for instance.

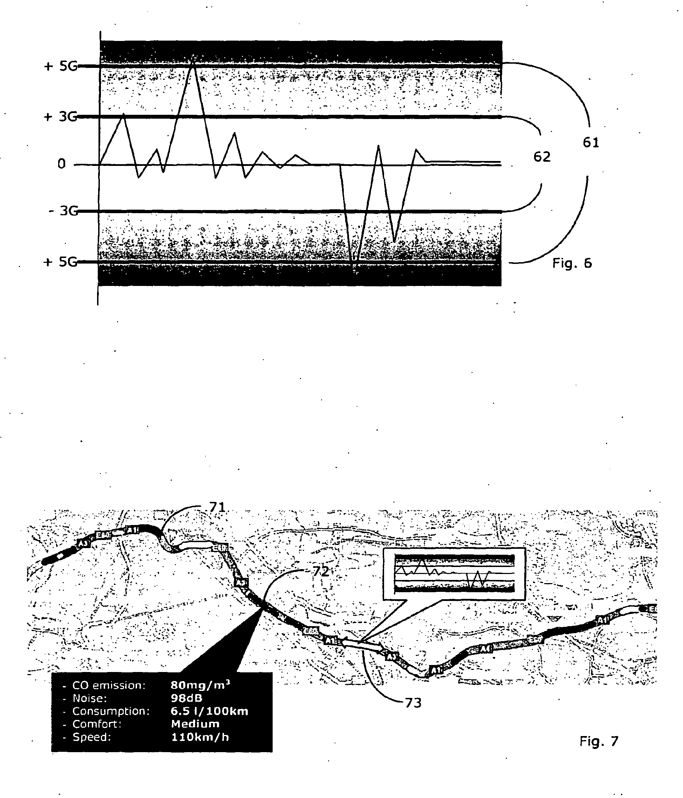

In the context of the present application, the term route should be read as a link between two or more geographical locations. A route 71 (cf. Fig. 7) in this context may comprise several routes and so on several levels of composition. The shortest route (of the lowest level in the composition mentioned) is a link between two consecutively recorded geographical coordinates. A drive of a route 71 should be understood as a following a route in the meaning defined above.

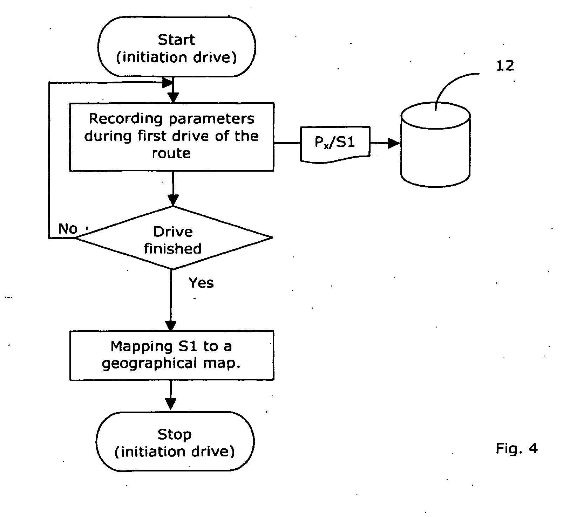

Fig. 4 shows a flowchart of an initiation drive of a route 71 using the inventive Driving Efficiency Improving System. During this first drive of a route 71 parameters Pₓ of a first set of parameters S1 are recorded and stored in the storage device 12. While recording, a location stamp is applied to all recorded parameters to enable a later location based retrieval and comparison of these recordings.

The timing of the recordings is essential in the preferred embodiment. The timing of recording the parameters is determined according to geographical locations, so that during consecutive drives of the same route 71 comparisons of parameters recorded in the same geographical location can be done. In some situations though a time span based timing might be favorable.

In the context of the present application, the start/stop of a drive should not be confused with a start/stop of the engine. In some cases these may happen at the same time but this is not necessarily true. At the end of such a drive the recorded set of parameters S1 is assigned to a certain geographical route 71 using the coordinates from the geographical positioning device 24. This is done in order to be able to later detect a consecutive drive of the same route 71.

This first drive of the route 71 does not necessarily mean a first drive of the route 71 by a certain vehicle 32 but it can also mean the first drive of this route 71 by any vehicle 32 using this or a similar system.

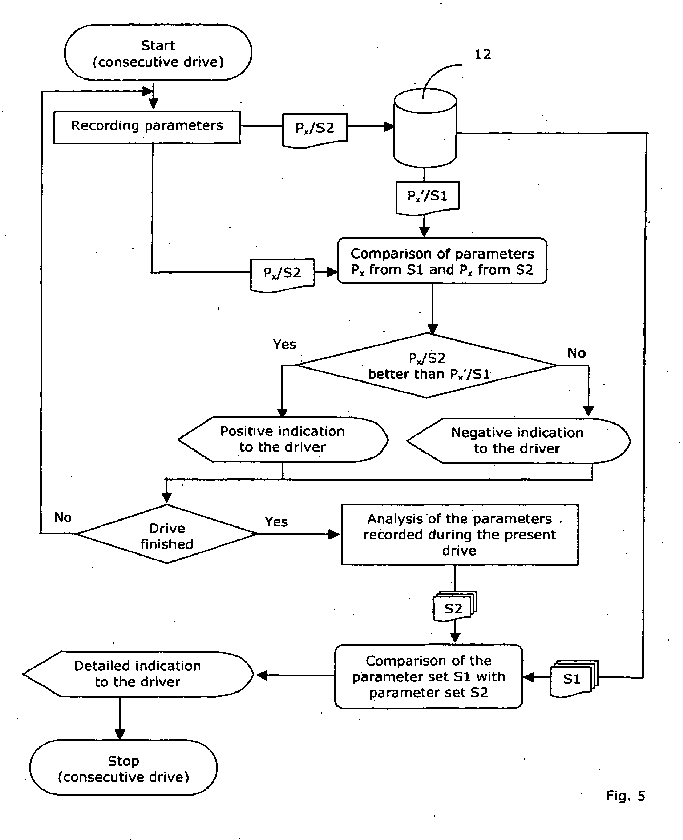

The flowchart on Fig. 5. shows the system during consecutive drives of a route 71. During such a drive, parameters Pₓ are recorded according to a timing described above. These parameters of the second set of parameters S2 are compared with corresponding parameters Pₓ' from the first set of parameters S1 recorded during a first drive of the route 71. Again first drive should be read in the sense described above. By corresponding parameters one should understand parameters recorded in corresponding geographical locations and/or similar driving conditions. The result of said comparison is materialized in indications provided to the driver reflecting the improvement/ worsening of the driving efficiency. It is to be understood that normalizations of these parameters is used so that the comparison of these parameters are objective. During driving these indication have a simple form such as a red/ green light or a gauge or similar means that do not distract the driver of the vehicle 32.

Preferably at the end of the drive, a detailed analysis of the parameters recorded S2 is performed. This analysis of the recorded parameters S2 is followed by a comparison with similar analysis of previously recorded sets of parameters S1. These will materialize in charts or graphs that offer a visual representation of the succession of parameters recorded, that the driver can review.

Both the indications during driving and the above described detailed analysis are based on comparisons that are made on parameters recorded on corresponding geographical locations. This correspondence is based on a location stamp applied to all recorded parameters.

It is important to mention that means for carrying out said comparisons and analysis reside inside the vehicle 32.

Just as an example, Fig. 6 shows a diagram of gravitational forces (G forces) that reflects the acceleration/ braking of the vehicle 32. On such a diagram one can easily notice the values that are above a certain threshold. In this case these G-forces that exceed the lower threshold 62 (in absolute value in this case) cause a discomfort to the passengers, and G-forces that exceed the upper threshold 61 reflect dangerous driving that may lead to accidents.

As an example of the analysis of a drive and the mapping of that drive to a geographical map, Figure 7 is presented. On this figure the route 71 driven is shown with a bold line having different colors depending on the efficiency of the driving. In a preferred embodiment the driver (or an other user of the Driving Efficiency Improving System) may select a certain point 72 or segment 73 of the route 71 and view the specific details of the driving efficiency corresponding to the selected point 72 or route segment 73. These location specific details might take the form of a diagram similar to the one presented in the previous paragraph or they might be presented as a list of parameter recordings or other suitable forms of indication.

All the above mentioned comparisons and analysis are done so that the driving efficiency can be increased during consecutive drives of the same route 71 or even different routes. A non exhaustive list of said improvements is related to:
- fuel economy;
- increased comfort of passengers;
- less wear of tires, brakes, etc;
- lower noise produced by the engine;
- reduced driving time of the route;
- reduced emission of pollution ;
- comfort of passengers; etc.

In a further embodiment automatic correction means, like software programs, application specific integrated circuits or other suitable means are used to act according to the recorded parameters as well as to the comparison of parameters from different sets of parameters. Just as an example these automatic means control the so called cruise control of a vehicle, the engine management, suspension and other parameters of a vehicle.

With an automation of these measures the workload of the driver is reduced while keeping the benefits of the Driving Efficiency Improving System. Furthermore using such automation the reaction time is reduced and the degree of the influence of the recorded parameters can be increased.

Besides the obvious benefits of the system like less pollution, increased comfort of the passengers, lower noise emitted, reduced drive time, the system also brings further longer term benefits. By a wide adoption of the Driving Efficiency Improving System, a decongestion of highways can be achieved by a rerouting of traffic.

In a different scenario the pressure that is currently on drivers can be diminished by companies that would adopt this system so that the reduction of costs is not done by a pressure on the drivers to drive faster, but by the savings due to a more efficient driving. This way many additional expenses can be avoided by such companies such as costs related to accidents, loss of vehicles or even legal expenses due to lawsuits related to such accidents, not to mention environmental benefits.

A special version of the present system could be designed so that it can be used by truck-drivers, such as couriers, or taxi drivers, for instance.

## Claims

1. A method for improving the driving of a vehicle (32), comprising the steps:
- prerecording a first set of parameters (S1) during an initiation drive of a route (71);
- recording a second set of parameters (S2) during a consecutive drive of said route (71);
- comparing parameters of the first set of parameters (S1) with parameters of the second set of parameters (S2);
- using said comparison to provide indications to a driver of the vehicle (32);
these steps being carried out by means residing inside the vehicle (32), **characterized by** the steps:
- mapping of the first and/or second set of parameters (S1, S2) to exact geographical positions to relate said sets of parameters (S1, S2) to a route (71) between two geographical locations;
- determining the timing of recording the parameters (S1, S2) according to geographical locations,
wherein various of said indications are provided to the driver of the vehicle (32) to reflect an improvement/worsening of the driving efficiency, and wherein the method is employed in order to improve the driving efficiency by helping the driver of the vehicle (32) to drive the vehicle (32) more economically efficient.

2. The method of claim 1, further comprising the step of:
- (continuously) providing aid means for helping the driver of the vehicle (32) to improve his driving efficiency.

3. The method of claims 1 or 2, further comprising the steps:
- receiving additional parameter recordings from similar systems of other vehicles (32);
- using parameters of said additional parameter recordings to provide further indications to the driver of the vehicle (32) about road and/or driving conditions.

4. The method of claim 1 or 2, further comprising the step of:
- forwarding the first or second set of parameters (S1, S2) to similar systems of other vehicles (32).

5. The method of one of the previous claims wherein said driving efficiency relates to one or more of the following:
- fuel economy of the vehicle (32),
- tire wear of the vehicle (32),
- produced noise by the vehicle (32),
- driving time of the route (71),
- emission of pollutant gases,
- comfort of passengers.

6. The method of one of the previous claims wherein said first and second set of parameters (S1, 52) include one or more of the following:
- acceleration/deceleration,
- longitudinal and lateral gravitational forces,
- fuel consumption,
- produced noise levels,
- vehicle speed,
- geographical coordinates,
- rotational speed of the engine of the vehicle (32),
- quantity of emitted pollutant gases,
- special landmarks,
- special events.

7. The method of one of the previous claims further comprising the step of:
- performing automatic corrections of parameters according to the comparison of parameters in order to improve the driving efficiency of the vehicle (32).

8. The method of one of the previous claims, wherein during driving said indications have a simple form that do not distract the driver of the vehicle (32).

9. The method of one of the previous claims 1-7, wherein at the end of the drive, a detailed analysis of the second set of parameters (52) recorded is performed.

10. A system to be used for improving driving of a vehicle (32) comprising:
- means for capturing a set of physical parameters of the vehicle (32) regarding or related to the driving,
- means for storing (12) said set of parameters,
- computational means (27) for comparing parameters of different sets of parameters (S1, S2),
- indication means (23) for informing a driver of the vehicle (32),
- a geographical positioning device (24),
- data transmitting and receiving means (26) for forwarding/receiving parameters,
**characterized in that**:
- said system is enabled to perform a mapping of the set of parameters (S1, S2) to exact geographical positions to relate said sets of parameters (S1, S2) to a route (71) between two geographical locations, and
- to determine the timing of recording said sets of parameters (S1, S2) according to geographical locations,
wherein various of said indications are provided to the driver of the vehicle (32) to reflect an improvement/worsening of the driving efficiency, and wherein the system is employed in order to allow the driving efficiency to be improved by helping the driver of the vehicle (32) to drive the vehicle (32) more economically efficient.

11. The system of claim 10, wherein said means for capturing a set of parameters of the vehicle (32) are onboard sensors (22) of the vehicle (32).

12. The system of claim 10, **characterized by** that said system is an integrated system built in the vehicle (32) at manufacturing.

13. The system of claim 10, **characterized by** that said system is an add-on system that can be installed in the vehicle (32) at any time independently from the manufacturer of the vehicle (32).

14. The system of claim 13, **characterized by** that said system comprises interfaces for connecting to the existing communication link (21) of the vehicle (32) in order to have access to the data recorded by the existing onboard sensors (22) of the vehicle (32).

15. The system of claim 10, wherein said onboard sensors (22) include one or more of the following:
- acceleration/ deceleration sensors,
- sensors that measure longitudinal and lateral gravitational forces,
- fuel consumption sensors,
- produced noise level sensor,
- vehicle speed sensor,
- positioning sensor that provides geographical coordinates ,
- sensors for measuring the rotational speed of the engine of the vehicle (32),
- sensors that measures quantity of emitted pollutant gases.

16. The system of one of the claims 10 to 15 further comprising:
- automatic correction means, like software programs, application specific integrated circuits or other suitable means used for an automatic correction of parameters.

## Patentansprüche

1. Ein Verfahren zum Verbessern des Fahrens eines Fahrzeugs (32), die folgenden Schritte umfassend:
- Voraufzeichnen eines ersten Satzes von Parametern (S1) während einer Initiierungsfahrt einer Route (71);
- Aufzeichnen eines zweiten Satzes von Parametern (S2) während einer nachfolgenden Fahrt der genannten Route (71);
- Vergleichen von Parametern des ersten Satzes von Parametern (S1) mit Parametern des zweiten Satzes von Parametern (S2);
- Einsetzen des besagten Vergleichs, um einem Fahrer des Fahrzeugs (32) Hinweise bereit zu stellen;
wobei diese Schritte durch Mittel ausgeführt werden, die in dem Fahrzeug (32) angeordnet sind, **gekennzeichnet durch** die Schritte:
- Abbilden des ersten und/oder zweiten Satzes von Parametern (S1, S2) auf exakte geografische Positionen, um die genannte Sätze von Parametern (S1, S2) mit einer Route (71) zwischen zwei geografischen Orten in Bezug zu setzen;
- Bestimmen des Timings des Aufzeichnens der Parameter (S1, S2) in Abhängigkeit von geografischen Orten,
worin verschiedene der genannten Hinweise dem Fahrer des Fahrzeugs (32) bereit gestellt werden, um eine Verbesserung/Verschlechterung der Fahreffizienz widerzuspiegeln, und worin das Verfahren eingesetzt wird, um die Fahreffizienz zu verbessern, indem dem Fahrer des Fahrzeugs (32) geholfen wird das Fahrzeug (32) wirtschaftlich sparsamer zu fahren.

2. Das Verfahren nach Anspruch 1, das weiter den Schritt umfasst:
- (kontinuierliches) Bereitstellen von Hilfsmitteln, um dem Fahrer des Fahrzeugs (32) zu helfen seine Fahreffizienz zu verbessern.

3. Das Verfahren nach Anspruch 1 oder 2, das weiter die Schritte umfasst:
- Empfangen zusätzlicher Parameteraufzeichnungen von ähnlichen Systemen anderer Fahrzeuge (32);
- Einsetzen von Parameter der genannten zusätzlichen Parameteraufzeichnungen, um dem Fahrer des Fahrzeugs (32) weitere Hinweise über Strassen- und/oder Fahrbedingungen bereit zu stellen.

4. Das Verfahren nach Anspruch 1 oder 2, das weiter den Schritt umfasst:
- Weiterleiten des erstens oder zweiten Satzes von Parametern (S1, S2) an ähnliche Systeme anderer Fahrzeuge (32).

5. Das Verfahren nach einem der vorausgehenden Ansprüche worin die genannte Fahreffizienz zu einem oder mehr des Folgenden Bezug hat:
- Treibstoffsparsamkeit des Fahrzeugs (32),
- Reifenverschleiss des Fahrzeugs (32),
- vom Fahrzeug (32) produziertes Geräusch,
- Fahrzeit der Route (71),
- Emission von Schadstoffgasen,
- Komfort der Passagiere.

6. Das Verfahren nach einem der vorausgehenden Ansprüche worin der genannte erste und zweite Satz von Parametern (S1, S2) eines oder mehr des Folgenden einschliesst:
- Beschleunigung/Verzögerung,
- Längs- und Querbeschleunigungskräfte,
- Treibstoffverbrauch,
- Produziertes Geräuschniveau,
- Fahrzeuggeschwindigkeit,
- geografische Koordinaten,
- Umdrehungsgeschwindigkeit der Maschine des Fahrzeugs (32),
- Menge der emittierten Schadstoffgase,
- spezielle Landmarken,
- spezielle Ereignisse.

7. Das Verfahren nach einem der vorausgehenden Ansprüche, das weiter den Schritt umfasst:
- Ausführen automatischer Korrekturen von Parametern in Abhängigkeit von dem Vergleich der Parameter, um die Fahreffizienz des Fahrzeugs (32) zu verbessern.

8. Das Verfahren nach einem der vorausgehenden Ansprüche, worin während des Fahrens die genannten Hinweise eine einfache Form haben, die den Fahrer des Fahrzeugs (32) nicht ablenken.

9. Das Verfahren nach einem der vorausgehenden Ansprüche 1-7, worin am Ende der Fahrt eine detaillierte Analyse des zweiten Satzes von aufgezeichneten Parametern (S2) ausgeführt wird.

10. Ein System zur Verwendung um das Fahren eines Fahrzeugs (32) zu verbessern, umfassend:
- Mittel zum Erfassen eines Satzes physikalischer Parameter des Fahrzeugs (32) betreffend oder in Bezug auf das Fahren,
- Mittel zum Speichern (12) des Satzes von Parametern,
- Rechenmittel (27) zum Vergleichen des Parameter verschiedener Sätze von Parametern (S1, S2),
- Hinweis-Mittel (23) zum Informieren eines Fahrers des Fahrzeugs (32),
- Ein geographisches Positionierungsgerät (24),
- Datenübertragungs- und -empfangsmittel (26) zum weiterleiten/empfangen von Parametern,
**dadurch gekennzeichnet, dass**:
- das genannte System eine Abbildung des Satzes von Parametern (S1, S2) auf exakte geographische Positionen ermöglicht, um die genannten Sätze der Parameter (S1, S2) auf eine Route (71) zwischen zwei geographischen Orten zu beziehen, und
- um das Timing des Aufzeichnen der Sätze von Parametern (S1, S2) in Abhängigkeit von geografischen Orten zu bestimmen,
worin verschiedene der genannten Hinweise dem Fahrer des Fahrzeugs (32) bereit gestellt werden, um eine Verbesserung/Verschlechterung der Fahreffizienz widerzuspiegeln, und worin das System eingesetzt wird, um zu ermöglichen die Fahreffizienz zu verbessern, indem dem Fahrer des Fahrzeugs (32) geholfen wird das Fahrzeug (32) wirtschaftlich sparsamer zu fahren.

11. Das System nach Anspruch 10, worin die genannten Mittel zum Erfassen eines Satzes physikalischer Parameter des Fahrzeugs (32) Sensoren (22) im Fahrzeug (32) sind.

12. Das System nach Anspruch 10, **dadurch gekennzeichnet, dass** das genannte System ein integriertes System ist, das in das Fahrzeug (32) bei der Herstellung eingebaut wurde.

13. Das System nach Anspruch 10, **dadurch gekennzeichnet, dass** das genannte System ein Zusatzsystem ist, das jederzeit in dem Fahrzeug (32) unabhängig von der Herstellung des Fahrzeugs (32) installiert werden kann.

14. Das System nach Anspruch 13, **dadurch gekennzeichnet, dass** das genannte System Schnittstellen zum Verbinden mit der existierenden Kommunikationsverbindung des Fahrzeugs (32) umfasst, um Zugang zu den Daten zu haben, die von den vorhandenen eingebauten Sensoren (22) im Fahrzeug (32) aufgezeichnet werden.

15. Das System nach Anspruch 10, worin die eingebauten Sensoren (22) eines oder mehr der Folgenden umfassen:
- Beschleunigungs-/Verzögerungssensoren,
- Sensoren, die Längs- und Querbeschleunigungskräfte messen,
- Treibstoffverbrauchssensoren,
- Sensoren für produziertes Geräuschniveau,
- Fahrzeuggeschwindigkeitssensoren,
- Positioniersensoren, die geografische Koordinaten bereit stellen,
- Sensoren zum Messen der Umdrehungsgeschwindigkeit der Maschine des Fahrzeugs (32),
- Sensoren, die die Menge der emittierten Schadstoffgase messen.

16. Das System nach einem der Ansprüche 10 bis 15, zusätzlich umfassend:
- Mittel zur automatischen Korrektur, wie Softwareprogramme, anwendungsspezifische integrierte Schaltungen oder andere geeignete Mittel, die für ein automatisches Korrigieren von Parametern gebraucht werden.

## Revendications

1. Procédé pour améliorer la conduite d'un véhicule (32), comprenant les étapes suivantes :
- préenregistrer un premier ensemble de paramètres (S1) pendant une conduite d'initiation sur un trajet (71);
- enregistrer un second ensemble de paramètres (S2) pendant une conduite ultérieure sur le même trajet (71);
- comparer les paramètres du premier ensemble de paramètres (S1) aux paramètres du second ensemble de paramètres (S2);
- utiliser ladite comparaison pour fournir des indications à un conducteur du véhicule (32) ;
ces étapes étant réalisées par des moyens se trouvant à l'intérieur du véhicule (32), **caractérisé par** les étapes suivantes :
- faire correspondre le premier et/ou le second ensemble(s) de paramètres (S1, S2) à des positions géographiques précises pour associer lesdits ensembles de paramètres (S1, S2) à un trajet (71) entre deux lieux géographiques ;
- déterminer le moment d'enregistrement des paramètres (S1, S2) en fonction des lieux géographiques,
plusieurs desdites indications étant fournies au conducteur du véhicule (32) pour refléter une amélioration/dégradation de l'efficacité de conduite, et le procédé étant employé afin d'améliorer l'efficacité de conduite en aidant le conducteur du véhicule (32) à conduire le véhicule (32) d'une manière plus efficace économiquement.

2. Procédé selon la revendication 1, comprenant en outre l'étape consistant à:
- fournir (en continu) des moyens d'aide pour aider le conducteur du véhicule (32) à améliorer son efficacité de conduite.

3. Procédé selon la revendication 1 ou 2, comprenant en outre les étapes suivantes :
- recevoir des enregistrements de paramètres supplémentaires à partir de systèmes similaires d'autres véhicules (32) ;
- utiliser les paramètres desdits enregistrements de paramètres supplémentaires pour fournir d'autres indications au conducteur du véhicule (32) sur les conditions de la route et/ou de la conduite.

4. Procédé selon la revendication 1 ou 2, comprenant en outre l'étape consistant à :
- transmettre le premier ou le second ensemble de paramètres (S1, S2) à des systèmes similaires d'autres véhicules (32).

5. Procédé selon l'une des revendications précédentes, dans lequel ladite efficacité de conduite concerne un ou plusieurs des éléments suivants :
- l'économie de carburant du véhicule (32),
- l'usure des pneus du véhicule (32),
- le bruit produit par le véhicule (32),
- le temps de conduite du trajet (71),
- l'émission de gaz polluants,
- le confort des passagers.

6. Procédé selon l'une des revendications précédentes, dans lequel lesdits premier et second ensembles de paramètres (S1, S2) incluent un ou plusieurs des éléments suivants :
- accélération/décélération,
- forces gravitationnelles longitudinales et latérales,
- consommation de carburant,
- niveaux sonores produits,
- vitesse du véhicule,
- coordonnées géographiques,
- vitesse de rotation du moteur du véhicule (32),
- quantité de gaz polluants émis,
- jalons particuliers,
- événements particuliers.

7. Procédé selon l'une des revendications précédentes, comprenant en outre l'étape consistant à :
- effectuer des corrections automatiques de paramètres en fonction de la comparaison de paramètres afin d'améliorer l'efficacité de conduite du véhicule (32).

8. Procédé selon l'une des revendications précédentes, dans lequel pendant la conduite lesdites indications ont une forme simple qui ne distrait pas le conducteur du véhicule (32).

9. Procédé selon l'une des revendications précédentes 1 à 7, dans lequel, à la fin de la conduite, une analyse détaillée du second ensemble de paramètres (S2) enregistré est effectuée.

10. Système destiné à être utilisé pour améliorer la conduite d'un véhicule (32) comprenant :
- des moyens pour acquérir un ensemble de paramètres physiques du véhicule (32) concernant la conduite ou liés à celle-ci,
- des moyens pour stocker (12) ledit ensemble de paramètres,
- des moyens de calcul (27) pour comparer les paramètres de différents ensembles de paramètres (S1, S2),
- des moyens d'indication (23) pour informer un conducteur du véhicule (32),
- un dispositif de positionnement géographique (24),
- des moyens de transmission et de réception de données (26) pour transmettre/recevoir des paramètres,
**caractérisé en ce que** :
- ledit système est en mesure d'effectuer une mise en correspondance de l'ensemble de paramètres (S1, S2) avec des positions géographiques précises pour associer lesdits ensembles de paramètres (S1, S2) à un trajet (71) entre deux lieux géographiques, et
- de déterminer le moment d'enregistrement desdits ensembles de paramètres (S1, S2) en fonction des lieux géographiques,
plusieurs desdites indications étant fournies au conducteur du véhicule (32) pour refléter une amélioration/dégradation de l'efficacité de conduite, et le système étant employé afin de permettre d'améliorer l'efficacité de conduite en aidant le conducteur du véhicule (32) à conduire le véhicule (32) d'une manière plus efficace économiquement.

11. Système selon la revendication 10, dans lequel lesdits moyens pour acquérir un ensemble de paramètres du véhicule (32) sont des capteurs embarqués (22) du véhicule (32).

12. Système selon la revendication 10, **caractérisé en ce que** ledit système est un système intégré construit dans le véhicule (32) lors de la fabrication.

13. Système selon la revendication 10, **caractérisé en ce que** ledit système est un système complémentaire qui peut être installé dans le véhicule (32) à tout moment indépendamment du fabricant du véhicule (32).

14. Système selon la revendication 13, **caractérisé en ce que** ledit système comprend des interfaces pour se raccorder à la liaison de communication existante (21) du véhicule (32) afin d'avoir accès aux données enregistrées par les capteurs embarqués existants (22) du véhicule (32).

15. Système selon la revendication 10, dans lequel lesdits capteurs embarqués (22) comprennent un ou plusieurs des éléments suivants :
- capteurs d'accélération/décélération
- capteurs qui mesurent les forces gravitationnelles longitudinales et latérales,
- capteurs de consommation de carburant,
- capteur du niveau sonore produit,
- capteur de vitesse du véhicule,
- capteur de positionnement qui fournit des coordonnées géographiques,
- capteurs pour mesurer la vitesse de rotation du moteur du véhicule (32),
- capteurs qui mesurent la quantité de gaz polluants émis,

16. Système selon l'une des revendications 10 à 15 comprenant en outre :
- des moyens de correction automatique, comme des programmes logiciels, des circuits intégrés spécifiques à des applications ou d'autres moyens adaptés utilisés pour une correction automatique des paramètres.
